# EUROPÄISCHE PATENTANMELDUNG

(11) **EP 2 538 287 A1**
(43) Veröffentlichungstag der Anmeldung: **26.12.2012**
(21) Anmeldenummer: 11170894.7
(22) Anmeldetag: 22.06.2011
(51) Int. Cl.: G05B 19/042

(54) **Automatisches Ermitteln von Werkzeugen einer automatisierten Einrichtung**

(71) Anmelder: SIEMENS AKTIENGESELLSCHAFT, 80333 München (DE)
(72) Erfinder: Kohler, Benjamin, 90409 Nürnberg (DE); Konopka, Frank, 90518 Altdorf (DE); Riedl, Wolfgang, 90459 Nürnberg (DE); Rosenberg, Jens Ansgar, 90459 Nürnberg (DE); Wittig, Sebastian, 90522 Oberasbach (DE)

(57) **Zusammenfassung**

Der Service von Automatisierungssystemen soll komfortabler gestaltet werden. Daher wird eine Konfigurationsvorrichtung (3, 6) zum Ermitteln eines Werkzeugs für eine Komponente (1, 2) einer automatisierten Einrichtung bereitgestellt. Sie weist eine Schnittstelleneinrichtung zum Herstellen einer Datenverbindung von der Konfigurationsvorrichtung (3, 6) zu der Komponente (1, 2) auf. Außerdem verfügt sie über eine Analyseeinheit zum automatischen Analysieren von Daten, die über die Schnittstelleneinrichtung von der Komponente (1, 2) erhalten sind, hinsichtlich Typ und/oder Version der Komponente und zum Bereitstellen entsprechender Information auf. Ferner verfügt sie über eine Werkzeugkonfigurationseinrichtung (6) zum Ermitteln des Werkzeugs, das auf die Komponente (1, 2) abgestimmt ist und mit dem die Komponente veränderbar ist, aus einer vorgegebenen Menge an Werkzeugen auf der Grundlage der Information von der Analyseeinheit.

## Beschreibung

Die vorliegende Erfindung betrifft eine Konfigurationsvorrichtung zum Ermitteln eines Werkzeugs für eine Komponente einer automatisierten Einrichtung. Darüber hinaus betrifft die vorliegende Erfindung ein Verfahren zum automatischen Ermitteln eines Werkzeugs durch eine solche Konfigurationsvorrichtung.

Für das Steuern und Regeln von Automatisierungsprozessen in einer Anlage oder in einer Maschine, also in einer automatisierten Einrichtung, werden heute vielfach speicherprogrammierbare Steuerungen (PLC) eingesetzt. Für die Regelung von Motoren verwendet man komplexe Antriebe. In der Gebäudeautomatisierung verarbeiten programmierbare Steuerungen eine Vielzahl von Sensorinformationen und steuern Aktoren an. Insofern sind hier als "Komponenten einer automatisierten Einrichtung" Steuerungen, Aktoren, Sensoren und auch komplexere Geräte einer automatisierten Anlage zu verstehen.

Die Programmierung, Parametrierung und Inbetriebnahme dieser speicherprogrammierbaren Steuerungen, Antriebe und Steuerungseinheiten (im Folgenden unter dem Begriff "Komponenten" zusammengefasst) erfolgt über spezialisierte Programme, den Engineering- oder Inbetriebnahmewerkzeugen, im Folgenden mit "ES- bzw. IBN-Werkzeuge" abgekürzt.

Diese Programme laufen typischerweise auf PC-basierten Computern, den so genannten Programmiergeräten. Die Programmiergeräte kommunizieren über eine Datenverbindung mit den Komponenten.

Eine Automatisierungslösung kann aus einer Vielzahl von Komponenten verschiedener Art bestehen, die koordiniert zusammenwirken müssen. Daher werden in den ES-Werkzeugen Automatisierungsprojekte angelegt, in denen die Programmierung bzw. Parametrierung einer oder mehrerer Komponenten erfolgt.

Die komplexen Eigenschaften der Komponenten haben zur Folge, dass die ES- bzw. IBN-Werkzeuge auf bestimmte Komponenten-Baureihen und -versionen zugeschnitten sind, um den vollen Funktionsumfang der Komponenten ausnutzen zu können. Eine neue Version einer Komponente setzt daher häufig auch eine neue Version eines ES- bzw. IBN-Werkzeugs voraus, um auf alle Eigenschaften und Funktionen der Komponenten zugreifen zu können.

Das Datenformat, in dem ein Automatisierungsprojekt persistent auf einem Datenträger abgelegt wird, kann sich zwischen verschiedenen Versions-Ausgabebeständen des Engineeringwerkzeugs ändern, sodass eine Abhängigkeit zwischen dem Projektdatenformat und der Version des Engineeringwerkzeugs besteht.

Eine weitere Eigenschaft vieler ES- bzw. IBN-Werkzeugen ist, dass unter einer gegebenen Betriebssysteminstallation auf dem Programmiergerät jeweils nur eine Werkzeugversion installiert werden kann. Beispielsweise können eine Version V1.0 und eine Version V2.0 eines ES-Werkzeugs nicht gleichzeitig unter derselben Windowsinstallation installiert werden.

Im Wartungs- oder Servicefall an einer Anlage oder Maschine stellt sich einem Service-Techniker die Aufgabe, die Programmierung oder Parametrierung der verbauten Komponenten zu modifizieren oder beim Austausch von Komponenten das neu installierte Austauschgerät in Betrieb zu nehmen. Zur Erfüllung dieser Aufgaben benötigt der Service-Techniker die geeigneten ES- bzw. IBN-Werkzeuge, in denen er gegebenenfalls auch das Automatisierungsprojekt für die Anlage/Maschine öffnen muss.

Oft ist der Service-Techniker ein Dienstleister, der nicht nur für eine bestimmte Anlage bzw. Maschine zuständig ist, sondern der vom Betreiber einer Anlage bzw. Maschine im Servicefall angefordert wird. Die erste Aufgabe des Service-Technikers ist dann die Beschaffung der Informationen darüber, welche ES- bzw. IBN-Werkzeuge in welcher Version er benötigen wird, um seinen Auftrag vor Ort möglichst effizient erledigen zu können. Diese Information liegt aber oft nicht vor, weil die dazu notwendige Dokumentation der Anlage/Maschine nie erstellt wurde, nicht vorliegt oder veraltet ist, oder weil die Dokumentation die benötigte Information einfach nicht enthält. Im schlimmsten Fall muss der Service-Techniker vor Ort feststellen, dass er mit den vorhandenen ES-/ IBN-Werkzeugen seine Aufgabe nicht erfüllen kann, bis die benötigten Programmpakete beschafft und installiert sind.

Bislang behalf man sich so, dass als Vorbereitung auf den Service-Fall auf einer Anlage bzw. am Standort einer Maschine ein Programmiergerät vorgehalten wird, auf dem die benötigten ES-/IBN-Werkzeuge installiert sind. Dabei können folgende Probleme auftreten:
- Wurden in der Zwischenzeit Änderungen (Einbau neuer Komponenten, Ersatz einer Komponente durch eine neuere Bauart oder Firmwareupdates an den Komponenten) an der Anlage/Maschine vorgenommen, so kann die auf dem Programmiergeräte installierte Software veraltet sein.
- Das Programmiergerät ist defekt oder wurde gestohlen oder wird inzwischen für andere Aufgaben verwendet.

Typischerweise versucht der Service-Techniker möglichst frühzeitig zu ermitteln, welche ES-/IBN-Werkzeuge in welcher Version er am Einsatzort benötigen wird und installiert diese auf seinem Programmiergerät. Dazu holt er z. B. per E-Mail oder telefonisch Informationen ein. Wenn er zu wissen glaubt, welche Werkzeuge in welcher Version er am Einsatzort benötigen wird, installiert er diese Werkzeuge. Dabei treten unter Umständen folgende Probleme auf:
- Die Information war unvollständig oder veraltet.
- Das Bereithalten der Werkzeuge verursacht hohe Lizenzkosten.
- Es ist oft nicht möglich, verschiedene Versionen eines Werkzeugs nebeneinander auf einem Programmiergerät installiert zu halten. Zwar wird normalerweise die neueste Version eines Werkzeugs mit allen Gerätevarianten, die bereits in den Vorgängerversionen unterstützt wurden, verwendbar sein. Aber oft ist es dann nicht möglich, ein Automatisierungsprojekt zu modifizieren und wieder im alten Projektformat abzuspeichern. Für den Anlagen-/ Maschinenbetreiber kann das unakzeptabel sein.

Die Aufgabe der vorliegenden Erfindung besteht somit darin, den Service einer automatisierten Einrichtung zu erleichtern.

Erfindungsgemäß wird diese Aufgabe gelöst durch eine Konfigurationsvorrichtung zum Ermitteln eines Werkzeugs für eine Komponente einer automatisierten Einrichtung, umfassend eine Schnittstelleneinrichtung zum Herstellen einer Datenverbindung von der Konfigurationsvorrichtung zu der Komponente, einer Analyseeinheit zum automatischen Analysieren von Daten, die über die Schnittstelleneinrichtung von der Komponente erhalten sind, hinsichtlich Typ und/oder Version der Komponente und zum Bereitstellen entsprechender Information, und einer Werkzeugkonfigurationseinrichtung zum Ermitteln des Werkzeugs, das auf die Komponente abgestimmt ist und mit dem die Komponente veränderbar ist, aus einer vorgegebenen Menge an Werkzeugen auf der Grundlage der Information von der Analyseeinheit.

Darüber hinaus wird erfindungsgemäß bereitgestellt ein Verfahren zum automatischen Ermitteln eines Werkzeugs für eine Komponente einer automatisierten Einrichtung durch eine Konfigurationsvorrichtung, Herstellen einer Datenverbindung von der Konfigurationsvorrichtung zu der Komponente, automatisches Analysieren von Daten der Komponente hinsichtlich Typ und/oder Version der Komponente und Bereitstellen entsprechender Information durch die Konfigurationsvorrichtung, und Ermitteln des Werkzeugs, das auf die Komponente abgestimmt ist und mit dem die Komponente veränderbar ist, durch die Konfigurationsvorrichtung aus einer vorgegebenen Menge an Werkzeugen auf der Grundlage der beim Analysieren gewonnenen Information.

In vorteilhafter Weise wird also automatisch der Typ und/oder die Version einer Komponente einer automatisierten Einrichtung ermittelt. Mit diesem Wissen kann dann zielgerichtet das passende Werkzeug beschafft bzw. bereitgestellt werden. In einem Spezialfall stellt die "Komponente" ein Automatisierungsprojekt dar, und das passende Werkzeug zum Öffnen des Automatisierungsprojekts wird durch die Konfigurationsvorrichtung ermittelt.

Vorzugsweise handelt es sich bei dem Werkzeug um einen Teil eines Engineeringsystems zum Projektieren und/oder Inbetriebnehmen der automatisierten Einrichtung. Derartige Werkzeuge sind insbesondere bei komplexeren Anlagen hilfreich.

Die Komponente kann eine speicherprogrammierbare Steuerung, ein Antrieb bzw. Aktor oder ein Sensor sein. Es kann also mit der erfindungsgemäßen Konfigurationsvorrichtung ein Werkzeug für die gesamte automatisierte Einrichtung oder eine Teileinheit davon automatisch ermittelt werden.

Die Konfigurationsvorrichtung kann eine Ladeeinrichtung zum Laden des ermittelten Werkzeugs von einem externen Server aufweisen. Damit kann ein Werkzeug von einer externen Speichereinrichtung heruntergeladen werden.

Des Weiteren kann die Analyseeinheit dazu ausgebildet sein, ein Automatisierungsprogramm, mit dem die Komponente gesteuert wird, hinsichtlich Typ, Version und/oder Datenformat zu analysieren und Daten darüber in der genannten Information bereitzustellen. Damit kann die Analyseeinheit alle wesentlichen Informationen gewinnen, um beispielsweise die aktuelle Version eines passenden Werkzeugs zu finden.

Ferner kann mit der Analyseeinheit ein Werkzeug, mit dem die Komponente oder die automatisierte Einrichtung programmierbar ist, identifizierbar sein. Die Analyseeinheit analysiert dann nicht nur die Daten der automatisierten Einrichtung, sondern sie sucht aufgrund dieser Daten auch ein passendes Werkzeug aus.

Insbesondere ist es vorteilhaft, wenn ein Programmiergerät zum Programmieren einer automatisierten Einrichtung oder einer Komponente davon mit einer oben dargestellten Konfigurationsvorrichtung ausgestattet ist. Derartige Programmiergeräte sind meist tragbare Computer, die ein flexibles Arbeiten erlauben.

Das Programmiergerät kann eine Kommunikationseinrichtung aufweisen, mit der eine Datenverbindung zu einem Server in einem öffentlichen Netz herstellbar ist. Speziell kann so beispielsweise ein Werkzeug aus dem Internet heruntergeladen werden.

In vorteilhafter Weise lässt sich dann das ermittelte Werkzeug mit der Kommunikationseinrichtung von dem Server herunterladen und von einer Recheneinrichtung des Programmiergeräts ausführen. Es lassen sich so beispielsweise mehrere Werkzeuge durch so genanntes "Daten-Streaming" auf das Programmiergerät herunterladen und dort ausführen.

Speziell können mehrere Werkzeuge mit der Konfigurationsvorrichtung für die Komponente oder die automatisierte Einrichtung ermittelbar, mit der Kommunikationsvorrichtung von dem Server herunterladbar und von der Recheneinrichtung gleichzeitig ausführbar sein. Die Ausführung der Werkzeuge ist dann von der Datenverbindung unabhängig.

Gemäß einer alternativen Ausführungsform wird mit der Recheneinrichtung ein Werkzeug ausgeführt, während gleichzeitig ein anderes oder mehrere andere Werkzeuge mit der Kommunikationsvorrichtung heruntergeladen werden. Dies hat den Vorteil, dass das zuerst vom Server geladene Werkzeug sofort ausgeführt werden kann, ohne den gesamten Ladeprozess für alle herunterzuladenden Werkzeuge abwarten zu müssen. Entsprechend einer weiteren Alternative weist das Programmiergerät eine Schnittstelleneinrichtung auf, mit der das ermittelte Werkzeug auf dem Server ausführbar ist, und die eine Datenkommunikation zwischen dem Werkzeug und der Komponente gewährleistet. Die Schnittstelleneinrichtung fungiert dabei beispielsweise als "Connector-Proxy" der sich automatisch um die unterschiedlichen Kommunikationsprotokolle für die Kommunikation zu den Komponenten und die Kommunikation zu dem Server kümmert.

Mit den oben genannten Aspekten kann sowohl die erfindungsgemäße Konfigurationsvorrichtung als auch das erfindungsgemäße Verfahren weitergebildet werden.

Die vorliegende Erfindung wird nun anhand der beigefügten Zeichnungen näher erläutert, in denen zeigen:
- FIG 1: eine Prinzipdarstellung eines Programmiergeräts zum Programmieren von Steuerungen eines Automatisierungssystems;
- FIG 2: ein erstes Ausführungsbeispiel zum Erstellen einer Werkzeugkonfiguration;
- FIG 3 und 4: ein zweites Ausführungsbeispiel zum Erstellen einer Werkzeugkonfiguration sowie
- FIG 5: ein drittes Ausführungsbeispiel zum Erstellen einer Werkzeugkonfiguration.

Die nachfolgend näher geschilderten Ausführungsbeispiele stellen bevorzugte Ausführungsformen der vorliegenden Erfindung dar.

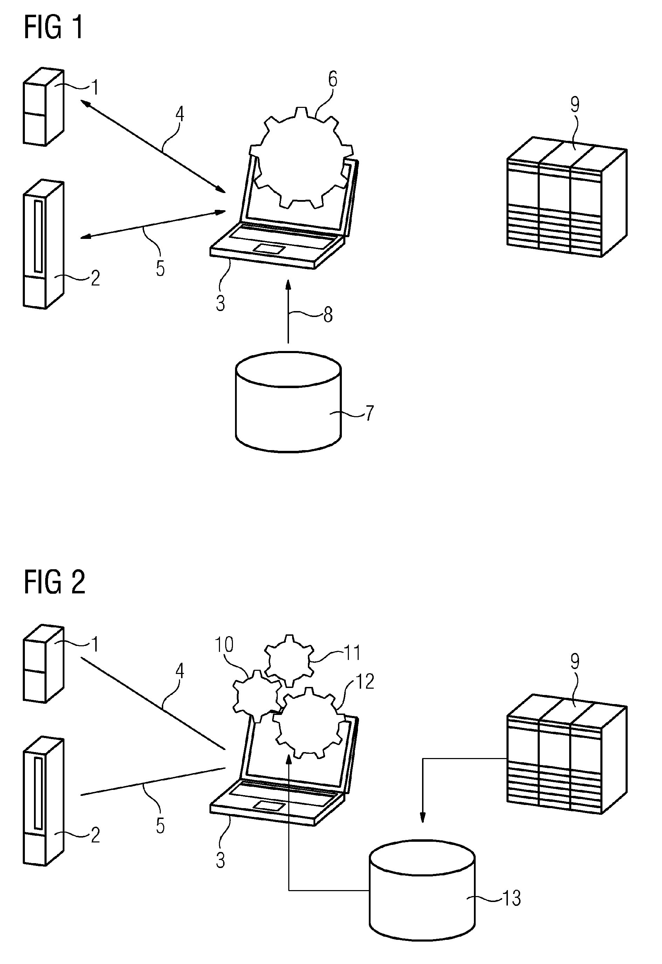

Ein Automatisierungsprogramm bzw. Automatisierungsprojekt lässt sich mit einem ES- bzw. IBN-Werkzeug ändern oder umparametrieren. Hierzu werden die geeigneten ES- bzw. IBN-Werkzeuge auf das Programmiergerät geladen, um das Automatisierungsprojekt bzw. dessen Komponenten voll umfänglich verändern bzw. betreiben zu können. Dazu wird beispielsweise ein System bereitgestellt, wie es in FIG 1 wiedergegeben ist. Demnach werden Steuerungsgeräte, Antriebe, Sensoren und sonstige Komponenten eines Automatisierungssystems bzw. einer automatisierten Einrichtung (in FIG 1 sind symbolisch zwei verschiedene Steuerungsgeräte 1 und 2 dargestellt) von einem Programmiergerät 3 programmiert. Dazu wird von dem Programmiergerät 3 jeweils eine Datenverbindung 4, 5 zu den Steuergeräten 1, 2 bzw. Komponenten aufgebaut. Die Datenverbindungen sind bidirektional.

In dem Programmiergerät 3 läuft ein Werkzeugkonfigurationsprogramm 6, mit dem passende Werkzeuge für die Steuerungsgeräte 1, 2 (Allgemeinkomponenten) und für das Bearbeiten des Automatisierungsprojekts 7 gefunden werden können. Das Werkzeugkonfigurationsprogramm 6 zusammen mit einem Hardwareteil des Programmiergeräts 3 bilden somit eine Konfigurationsvorrichtung.

In das Programmiergerät kann von einer Speichereinheit (nicht dargestellt) ein Automatisierungsprojekt 7 bzw. Automatisierungsprogramm über eine weitere Datenverbindung 8 geladen werden. Auf einem externen Server 9 werden unterschiedlichste Versionen und Typen von Werkzeugen bereitgestellt. Dieser Server 9 ist für das Programmiergerät 3 beispielsweise über das Internet erreichbar.

In einem Service-Beispielfall befindet sich auf dem Programmiergerät 3 zunächst lediglich das Werkzeug-Konfigurationsprogramm 6. Der Service-Techniker stellt die Datenverbindungen 4, 5 zwischen dem Programmiergerät 6 und den Komponenten bzw. einer Maschine oder Anlage her. Das Werkzeug-Konfigurationsprogramm 6 identifiziert die kontaktierbaren Komponenten 1, 2 bezüglich Typ und Version. Zusätzlich kann das Werkzeug-Konfigurationsprogramm 6 auch das Automatisierungsprojekt 7 analysieren und das Projektdatenformat identifizieren. Außerdem kann das Werkzeugkonfigurationsprogramm 6 auch zusätzlich die im Automatisierungsprojekt 7 projektierten Komponenten bezüglich Typ und Version identifizieren.

Alternativ kann das Werkzeug-Konfigurationsprogramm 6 auch vom Personal vor Ort dazu verwendet werden, die notwendigen ES-/IBN-Werkzeuge zu identifizieren. Dazu geht das Werkzeug-Konfigurationsprogramm beispielsweise anhand einer Tabelle vor, in der den verschiedenen Komponententypen und -versionen speziell passende Werkzeuge zugeordnet sind. Die dabei vom Werkzeug-Konfigurationsprogramm 6 ermittelten Ergebnisse lassen sich dann z. B. per E-Mail an den Service-Techniker schicken, der die entsprechenden Werkzeuge bereits im Voraus installieren kann.

Wenn eine Verbindung zum Internet hergestellt ist, nimmt das Werkzeug-Konfigurationsprogramm 6 Kontakt zu einem oder mehreren Tool-Servern 9 auf, auf denen ES-/IBN-Werkzeuge in verschiedenen Versionen bereitstehen. Das Werkzeug-Konfigurationsprogramm wählt die benötigten ES-/IBN-Werkzeuge in den passenden Versionen aus.

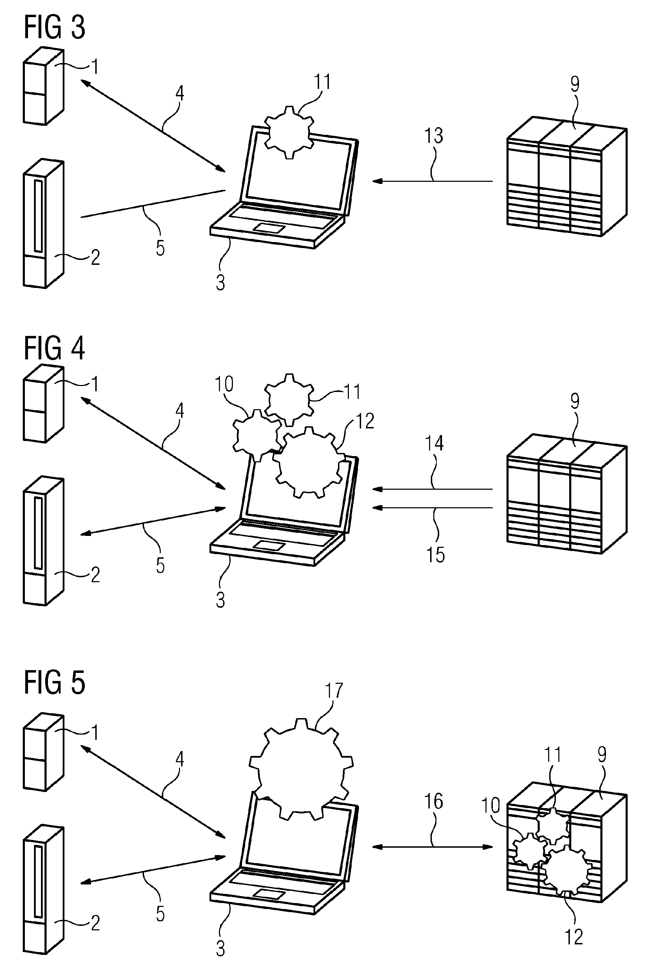

Es lassen sich nun folgende Varianten unterscheiden, wie die ausgewählten ES-/IBN-Werkzeuge zum Ablauf gebracht werden können, wobei jeweils prinzipiell die Hardwarestruktur (Bezugszeichen 1 bis 9) von FIG 1 vorliegt:
i) Gemäß dem Ausführungsbeispiel von FIG 2 liegen Werkzeuge in einer so genannten "streambaren Form" auf dem Server 9 (z. B. als eine mit VM-Ware ThinApp serialisierte Applikation). Die Werkzeuge können also ohne spezielles Installationsprogramm direkt vom Server 9 auf das Programmiergerät 3 heruntergeladen werden. Die gestreamten Werkzeuge 10, 11, 12 werden auf Anforderung durch das Werkzeug-Konfigurationsprogramm (in FIG 2 nicht dargestellt) in einen lokalen Cache 13 beispielsweise über das Internet geladen. Anschließend können sie aus dem Cache 13 heraus in dem Programmiergerät 3 gestartet werden. Der Vorteil dieses Verfahrens ist die unkomplizierte Installation, die außer dem Download keine weiteren Schritte mehr erfordert. Diese Art der "Installation" ermöglicht auch die gleichzeitige Installation verschiedener Werkzeugversionen. Zudem lassen sich die Werkzeuge nach Gebrauch wieder "rückstandsfrei" entfernen.
ii) Entsprechend dem Ausführungsbeispiel der FIG 3 zusammen mit FIG 4 wird zunächst nur ein Basis-Anteil des Werkzeugs bzw. ein Basiswerkzeug 11 vom Server 9 beispielsweise über das Internet auf das Programmiergerät 3 geladen, was durch den Pfeil 14 angedeutet ist. Nach dem Laden wird das Basiswerkzeug 11 sofort ausgeführt bzw. benutzt (vgl. FIG 3). Während das Werkzeug dann benutzt wird, können weitere Module (Werkzeuge 10, 12) vom Server 9 nachgeladen werden, was durch die Pfeile 14 und 15 angedeutet ist (vgl. FIG 4). Gegebenenfalls kann die Reihenfolge des Ladens in Abhängigkeit von der benutzten Funktionalität erfolgen. Für den Fall, dass auf dem Programmiergerät 3 noch ES-/ IBN-Werkzeuge von einem früheren Einsatz vorhanden sind, sorgt das Werkzeug-Konfigurationsprogramm 6 (in den FIG 3 und 4 nicht dargestellt) für eine Deinstallation von inkompatiblen Komponenten, bevor die obigen Installationsschritte durchgeführt werden.
iii) Das Werkzeug-Konfigurationsprogramm lädt die für eine vollständige Werkzeuginstallation benötigten Dateien vom Server 9 und installiert diese anschließend (diese Variante ist in den Figuren nicht dargestellt). Für den Fall, dass auf dem Programmiergerät noch ES-/IBN-Werkzeuge von einem früheren Einsatz vorhanden sind, sorgt das Werkzeug-Konfigurationsprogramm für eine Deinstallation von inkompatiblen Komponenten, bevor die obigen Installationsschritte durchgeführt werden.
iv) Gemäß dem Ausführungsbeispiel von FIG 5 startet das Werkzeug-Konfigurationsprogramm (in FIG 5 nicht dargestellt) die benötigten ES-/IBN-Werkzeuge 10, 11 und 12 zur Ausführung auf dem Server 9 bzw. den Servern. Auf dem Programmiergerät läuft dann lediglich ein so genannter "Connector-Proxy", der hauptsächlich als Schnittstelleneinrichtung zwei Aufgaben erfüllt:
   a) Die Darstellung der graphischen Benutzeroberfläche der ES-/IBN-Werkzeuge 10, 11, 12 auf dem Programmiergerät 3 und Entgegennahme und Weiterleitung von Benutzereingaben, was durch den Doppelpfeil 16 angedeutet ist.
   b) Die Bereitstellung einer gesamten Kommunikationsverbindung (Verbindungen 4, 5 zusammen mit Verbindung 16) zwischen den Komponenten bzw. Steuergeräten 1, 2 und den ES-/ IBN-Werkzeugen 10, 11, 12.

Lizenzkosten fallen für den Service-Techniker nun nicht mehr für die Bereithaltung der Werkzeuge an, sondern nur für deren tatsächliche Nutzung. In vorteilhafter Weise liegt also das Werkzeug-Konfigurationsprogramm als lokale Instanz auf dem Programmiergerät vor, und es identifiziert die erreichbaren Komponenten und das Projektdatenformat des Automatisierungsprojekts 7. Darüber hinaus erfolgt in vorteilhafter Weise die Bereitstellung von Engineering-IBN-Werkzeugen als z. B. "gestreamte" Applikation von einem Server. Weiterhin vorteilhaft ist das bedarfsgesteuerte Nachladen von auf einem Server bereitgestellten Softwarekomponenten während des Betriebs. Außerdem kann in vorteilhafter Weise ein Software-Modul für die Anbindung eines oder mehrere auf einen Server laufenden Engineering-/ IBN-Werkzeuge bezüglich Benutzeroberfläche und Kommunikation zu den Komponenten bereitgestellt werden.

### Bezugszeichenliste

- 1, 2: Steuerungsgeräte
- 3: Programmiergerät
- 4, 5, 8: Datenverbindungen
- 6: Werkzeugkonfigurationsprogramm
- 7: Automatisierungsprojekt
- 9: Server
- 10, 11, 12: Werkzeuge
- 13: Cache
- 14, 15, 16: Pfeile

## Patentansprüche

1. Konfigurationsvorrichtung zum Ermitteln eines Werkzeugs (10, 11, 12) für eine Komponente (1, 2) einer automatisierten Einrichtung,
**gekennzeichnet durch**
- eine Schnittstelleneinrichtung zum Herstellen einer Datenverbindung (4, 5) von der Konfigurationsvorrichtung zu der Komponente,
- eine Analyseeinheit zum automatischen Analysieren von Daten, die über die Schnittstelleneinrichtung von der Komponente erhalten sind, hinsichtlich Typ und/oder Version der Komponente und zum Bereitstellen entsprechender Information, und
- eine Werkzeugkonfigurationseinrichtung (6) zum Ermitteln des Werkzeugs (10, 11, 12), das auf die Komponente (1, 2) abgestimmt ist und mit dem die Komponente veränderbar ist, aus einer vorgegebenen Menge an Werkzeugen auf der Grundlage der Information von der Analyseeinheit.

2. Konfigurationsvorrichtung nach Anspruch 1, wobei das Werkzeug (10, 11, 12) Teil eines Engineeringsystems zum Projektieren und/oder Inbetriebnehmen der automatisierten Einrichtung sind.

3. Konfigurationsvorrichtung nach Anspruch 1 oder 2, wobei die Komponente (1, 2) eine speicherprogrammierbare Steuerung, ein Sensor oder ein Antrieb ist.

4. Konfigurationsvorrichtung nach einem der vorhergehenden Ansprüche, die eine Ladeinrichtung zum Laden des ermittelten Werkzeugs (10, 11, 12) von einem externen Server (9) aufweist.

5. Konfigurationsvorrichtung nach einem der vorhergehenden Ansprüche, wobei die Analyseeinheit dazu ausgebildet ist, ein Automatisierungsprogramm, mit dem die Komponente (1, 2) gesteuert wird, hinsichtlich Typ, Version und/oder Datenformat zu analysieren und Daten darüber in der Information bereitzustellen.

6. Konfigurationsvorrichtung nach einem der vorhergehenden Ansprüche, wobei mit der Analyseeinheit ein Werkzeug (10, 11, 12), mit dem die Komponente (1, 2) oder die automatisierte Einrichtung programmierbar ist, identifizierbar ist.

7. Programmiergerät (3) zum Programmieren einer automatisierten Einrichtung oder einer Komponenten (1, 2) davon mit einer Konfigurationsvorrichtung nach einem der vorhergehenden Ansprüche.

8. Programmiergerät nach Anspruch 7, das eine Kommunikationseinrichtung aufweist, mit der eine Datenverbindung (13 bis 16) zu einem Server (9) in einem öffentlichen Netz herstellbar ist.

9. Programmiergerät nach Anspruch 8, wobei das ermittelte Werkzeug (10, 11, 12) mit der Kommunikationseinrichtung von dem Server (9) herunterladbar und von einer Recheneinrichtung des Programmiergeräts (3) ausführbar ist.

10. Programmiergerät nach Anspruch 8, wobei mehrere Werkzeuge (10, 11, 12) mit der Konfigurationsvorrichtung für die Komponente (1, 2) oder die automatisierte Einrichtung ermittelbar, mit der Kommunikationsvorrichtung von dem Server (9) herunterladbar und von der Recheneinrichtung gleichzeitig ausführbar sind.

11. Programmiergerät nach Anspruch 8, wobei mit der Recheneinrichtung ein Werkzeug (10, 11, 12) ausgeführt wird, während gleichzeitig ein anderes oder mehrere andere Werkzeuge mit der Kommunikationsvorrichtung heruntergeladen werden.

12. Programmiergerät nach Anspruch 8, das eine Schnittstelleneinrichtung aufweist, mit der das ermittelte Werkzeug (10, 11, 12) auf dem Server (9) zur Ausführung anstoßbar ist, und die eine Datenkommunikation zwischen dem Werkzeug und der Komponente (1, 2) gewährleistet.

13. Verfahren zum automatischen Ermitteln eines Werkzeugs (10, 11, 12) für eine Komponente (1, 2) einer automatisierten Einrichtung durch eine Konfigurationsvorrichtung, **gekennzeichnet durch**
- Herstellen einer Datenverbindung (4, 5) von der Konfigurationsvorrichtung zu der Komponente (1, 2),
- automatisches Analysieren von Daten der Komponente hinsichtlich Typ und/oder Version der Komponente und Bereitstellen entsprechender Information **durch** die Konfigurationsvorrichtung, und
- Ermitteln des Werkzeugs (10, 11, 12), das auf die Komponente abgestimmt ist und mit dem die Komponente veränderbar ist, **durch** die Konfigurationsvorrichtung aus einer vorgegebenen Menge an Werkzeugen auf der Grundlage der beim Analysieren gewonnenen Information.
